# EUROPÄISCHE PATENTSCHRIFT

(11) **EP 1 053 518 B1**
(45) Veröffentlichungstag und Bekanntmachung des Hinweises auf die Patenterteilung: **26.07.2006**
(21) Anmeldenummer: 99957280.3
(22) Anmeldetag: 04.11.1999
(51) Int. Cl.: G06F 1/00

(54) **SCHUTZSCHALTUNG FÜR EINE INTEGRIERTE SCHALTUNG**
PROTECTION CIRCUIT FOR AN INTEGRATED CIRCUIT
CIRCUIT DE PROTECTION POUR CIRCUIT INTEGRE

(30) Priorität: 05.11.1998 EP 98120986; 15.04.1999 DE 19917080
(43) Veröffentlichungstag der Anmeldung: 22.11.2000
(73) Patentinhaber: Infineon Technologies AG, 81669 München (DE); SIEMENS AKTIENGESELLSCHAFT, 80333 München (DE)
(72) Erfinder: OTTERSTEDT, Jan, D-81673 München (DE); RICHTER, Michael, D-85521 Ottobrunn (DE); SMOLA, Michael, D-80636 München (DE); EISELE, Martin, D-81379 München (DE)
(74) Vertreter: Epping - Hermann - Fischer
(86) Internationale Anmeldenummer: PCT/EP1999/008456
(87) Internationale Veröffentlichungsnummer: WO 2000/028399

(56) Entgegenhaltungen:
- WO-A-96/00953
- US-A- 4 593 384
- US-A- 4 882 752
- MORI R ET AL: "SUPERDISTRIBUTION: THE CONCEPT AND THE ARCHITECTURE" TRANSACTIONS OF THE INSTITUTE OF ELECTRONICS, INFORMATION AND COMMUNICATION ENGINEERS OF JAPAN, Bd. E73, Nr. 7, Juli 1990 (1990-07), Seiten 1133-1146, XP002010383

## Beschreibung

Bestimmte Formen elektronischer Schaltungen, insbesondere integrierte Schaltungen zum Einsatz in Chipkarten, erfordern ein hohes Maß an Geheimhaltung von Schaltungsinformationen oder von chipinternen Daten. Diese sicherheitsrelevanten Informationen müssen sowohl vor Fremdanalyse als auch vor Manipulation geschützt werden.

Um diesen Schutz zu erreichen, wurden verschiedene Wege beschritten. Beispielsweise wurden die integrierten Schaltkreise mit einer metallischen Hülle beispielsweise aus Silber oder Titan versehen, wodurch ein Auslesen des integrierten Schaltkreises mittels Röntgenstrahlen verhindert werden kann. Weiterhin hat sich bewährt, in der obersten Schaltungsebene einer integrierten Schaltung eine Leiterbahn als Schutzschildleitung anzuordnen, und deren physikalische Eigenschaften, wie deren Widerstand, deren Kapazität, etc. zu überwachen. Bei der Feststellung einer Veränderung, beispielsweise durch ein Kurzschließen, Erden oder Durchtrennen beim unerwünschten Beobachten oder Manipulieren wird dann ein Alarmsignal ausgelöst. Eine derartige Schutzschaltung ist dem US-Patent 5,389,738 zu entnehmen. Diese Arten der Schutzschaltung erweisen sich aber als unzureichend, da die erwarteten physikalischen Eigenschaften durch geeignete externe Maßnahmen simuliert werden können und dadurch die Schutzschaltung keinen äußeren Angriff durch Beobachtung oder Manipulation feststellen kann und damit auch keine geeigneten Gegenmaßnahmen ergreifen kann.

In der WO 96/00953 ist ein kryptografischer Prozessor beschrieben, bei dem Ausgangsanschlüsse eines ersten Latches über nach einem bestimmten Muster angeordnete Leitungen mit Eingangsanschlüssen eines weiteren Latches verbunden sind. Die Ausgangsanschlüsse des ersten Latches werden von einem Zufallszahlengenerator angesteuert. Wenn die empfangenen Logikpegel von den originalen Logikpegeln unterschiedlich sind, wird angenommen, daß ein Angriff auf die Prozessoreinheit vorgenommen wurde. Die Leiterbahnen überkreuzen sich in dafür vorgesehenen Gebieten.

In der Literaturstelle Mori et al.: "Superdistribution: The Concept and the Architecture", Transactions of the Institute of Electronics, Information and Communication Engineers of Japan, Band E73, Nr. 7, Juli 1990 (1990-07), Seiten 1133 - 1146 ist ein System zur Verteilung von Software beschrieben. Ein geschütztes Modul in diesem System kann Schutzschaltungen in mehreren Schaltungsebenen unterhalb und/oder oberhalb einer integrierten Schaltung enthalten. Der Abstand zwischen Leiterbahnen ist so ausreichend gering ausgebildet, daß ein Durchdringen im Fall eines Angriffs nicht möglich ist.

In der US-A-4 593 384 ist eine Schutzschaltung beschrieben, bei der sich Leiterbahnen über mehrere Schaltungsebenen erstrecken, um einen unberechtigten Angriff zu verhindern.

Der Erfindung liegt die Aufgabe zugrunde, eine Schutzschaltung für integrierte Schaltungen anzugeben, die einen größeren Schutz vor ungewollter Beobachtung oder Manipulation gibt.

Diese Aufgabe wird durch eine Schutzschaltung für integrierte Schaltungen mit den in Anspruch 1 angegebenen Merkmalen gelöst. Vorteilhafte Weiterbildungen der Erfindung sind Gegenstand der Unteransprüche.

Die erfindungsgemäße Schutzschaltung ist in wenigstens einer Schaltungsebene oberhalb oder auch unterhalb der integrierten Schaltung angeordnet. Dabei zeigt diese Schutzschaltung eine oder mehrere Leiterbahnen, die mit sich zeitlich ändernden oder auch unterschiedlichen Signalen beaufschlagt werden. Diese Signale, werden über die Leiterbahnen übertragen und anschließend von dem oder den Detektoren untersucht, indem jeweils das empfangene zu untersuchende Signal mit einem Referenzsignal, das ist das erwartete Signal, verglichen wird. Stellt einer oder mehrere Detektoren eine signifikante Abweichung fest, so löst dieser ein Alarmsignal aus, das die integrierte Schaltung in einen Sicherheitsmodus überführt. In diesem Modus kann dann beispielsweise der Inhalt der Speicherzellen gelöscht werden, so dass die Steuerprogramme und die gespeicherten Daten nicht mehr auslesbar und interpretierbar sind.

Durch die Verwendung von mehreren unterschiedlichen Signalen, die über mehrere Leiterbahnen geleitet werden und anschließend durch die verschiedenen Detektoren analysiert werden, ist es nahezu unmöglich, alle alarmauslösenden Signale in der korrekten Weise von außen während des Versuchs des Auslesens oder Manipulierens einzuspeisen und den Detektoren das Vorhandensein dieser Signale vorzugaukeln. Wird beispielsweise der integrierte Schaltkreis flächig mechanisch von oben abgetragen, so dass ein Einblick in die darunterliegenden Schaltungsebenen des integrierten Schaltkreises ermöglicht werden sollen, so sind zuerst die darüberliegenden Leiterbahnen der Schutzschaltung betroffen, was zu einer Veränderung bzw. zu einem Unterbrechen der Signalübertragung führt, welche durch einen oder auch durch mehrere Detektoren festgestellt wird. Entsprechendes gilt auch, wenn mit Miniaturnadeln einzelne Leiterbahnen abgegriffen werden, wodurch sich Veränderungen beispielsweise in der Signalform, der Signalbedämpfung oder ähnliches ergeben. All diese Veränderungen bewirken nun regelmäßig eine Fehlererkennung von verschiedenen Detektoren.

Somit muss nicht nur ein einziges Signal simuliert werden, sondern eine Vielzahl unterschiedlicher Signale. Gerade im Hinblick auf die sehr begrenzten räumlichen Gegebenheiten einer integrierten Schaltung ist es nahezu unmöglich, diese Vielzahl simulierter Signale spezifisch den verschiedenen Detektoren zuzuführen. Damit ist ein nahezu umfassender Schutz der integrierten Schaltung durch die darüber angeordnete Schutzschaltung gegeben.

Vorzugsweise wird die integrierte Schaltung sandwichartig durch eine Schutzschaltung oberhalb und eine Schutzschaltung unterhalb der integrierten Schaltung umschlossen, so dass eine Beobachtung oder Manipulation durch die Schutzschaltungen sowohl von oben als auch von unten ausgeschlossen ist.

Es hat sich bewährt, die Detektoren so auszubilden, dass sie bei der Auswertung der übertragenen Signale auf deren Integrität untersucht werden, was insbesondere durch einen CRC-Check, durch einen Quersummenvergleich, durch einen Parity-Check oder durch andere Signaturvergleiche erfolgen kann. Durch diesen Integritätsvergleich zwischen dem übertragenen Signal und dem Integritätswert des erwarteten Signals, auch Referenzsignal genannt, ist es möglich, eine Manipulation der Schutzschaltung zu verhindern, bei der der Detektor quasi kurzgeschlossen wird, bei dem ein und dasselbe Signal sowohl als Referenzsignal als auch als übertragenes Signal an den Detektor mit einem reinen Identitätsvergleich zur Feststellung eines Fehlverhaltens gegeben wird.

Die unterschiedlichen Signale, welche den verschiedenen Leiterbahnen zugeführt werden, können durch einen gemeinsamen Signalgenerator realisiert werden oder auch durch eine Vielzahl einzelner Signalgeneratoren. Vorzugsweise steht der oder die Generatoren mit den Detektoren dahingehend in Verbindung, dass der jeweilige Detektor von dem ihm zugeordneten Generator eine Information über die Art und Weise des zu erwartenden Signals, das Referenzsignal, erhält. Damit ist es möglich, dass die Generatoren dynamisch ihre abgegebenen Signale verändern und diese Veränderung den Detektoren mitteilen, was die Simulation der Signale bei einem Angriff weiter erschwert, da nun der zeitliche Verlauf der Signale Berücksichtigung findet.

Als besonders vorteilhaft hat es sich erwiesen, die Leiterbahnen über mehrere Schaltungsebenen zu erstrecken, wodurch eine wesentlich bessere Abdeckung der zu schützenden integrierten Schaltung möglich ist, wie auch der Einblick in den Aufbau der Schutzschaltung über mehrere Schaltungsebenen und damit ein Einblick in die Art und Weise der Generierung, der Signalführung und der Detektion der unterschiedlichen Signale wesentlich schwieriger ist und dadurch für eine Simulation von außen nicht zur Verfügung steht. Folglich führt jede Veränderung der Schutzschaltung durch einen Eingriff von außen zu einer Detektion des Fehlverhaltens, da eine Simulation durch die äußerst schwierige dreidimensionale Struktur der Ausbildung der Leiterbahn bzw. deren Führung äußerst schwierig bzw. nahezu ausgeschlossen ist. Damit wird deutlich, dass die eine Schaltungsebene der Schutzschaltung die andere Schaltungsebene der Schutzschaltung vor einer Analyse schützt. Mithin ist eine äußerst weitreichende und sichere Schutzschaltung für die integrierte Schaltung gegeben.

Nach einer bevorzugten Ausführungsform der Schutzschaltung sind die Leiterbahnen der Schutzschaltung so ausgebildet, dass sie die zu schützende integrierte Schaltung weitgehend idealerweise vollständig flächig so bedecken, dass in einer Durchsicht durch die Schutzschaltung auf den integrierten Schaltkreis keine Möglichkeit mehr besteht, die Schutzschaltung beispielsweise durch Bohrungen oder ähnliches direkt zu erreichen, das heißt, ohne die Leiterbahn der Schutzschaltung zu verletzen. Diese weitgehende oder vollständige Bedeckung wird gerade durch eine Ausbildung der Leiterbahn über mehrere Schaltungsebenen oder in mehreren Schaltungsebenen in besonderem Maße auf einfachem und sicherem Wege ermöglicht, da die Leiterbahnen in einer Ebene mit ausreichendem Abstand zueinander angeordnet sein können und dadurch ein Übersprechen verhindert ist und der Bereich zwischen den Leiterbahnen durch Leiterbahnen in der anderen Schaltungsebene der Schutzschaltung gerade abgedeckt werden kann, so dass eine vollständige Abdeckung des integrierten Schaltkreises bzw. der wesentlichen Teile dieses integrierten Schaltkreises ermöglicht ist.

Wird nun versucht, beispielsweise mittels einer Bohrung an den integrierten Schaltkreis zu kommen, so führt dies zu einer Verletzung einer der Leiterbahnen, was zu einem veränderten Signal führt. Wird die Leiterbahn mit einer sehr geringen Leiterbahnbreite ausgebildet, die der Größe einer derartigen Bohrung entspricht oder geringer ist, so führt jede derartige Bohrung zu einer Unterbrechung der Leiterbahn und damit zu einem sehr sicher zu detektierenden Fehlsignal. Auch ist es möglich, dass eine derartige Bohrung zu einem Kurzschluss zwischen verschiedenen Leiterbahnen führt, der als totaler Signaleinbruch sehr sicher als Fehlsignal durch die entsprechenden Detektoren erkannt wird. Dabei ist die Leiterbahnbreite bevorzugt so gewählt, dass sie der bei einer bestimmten verwendeten Chip-Technologie minimalen Leiterbahnbreite entspricht. Durch diese besonderen Ausbildungen der Leiterbahnen einerseits als sehr schmale Leiterbahnen und andererseits als sich über verschiedene Schaltungsebenen erstrekkend sowie als möglichst flächendeckend, ist ein überragendes Maß an Schutzwirkung gegen einen mechanischen Eingriff in die Schutzschaltung gegeben. Ein solcher Eingriff kann durch Bohrungen oder durch Abhobeln gegeben sein.

Nach einer bevorzugten Ausführungsform der Erfindung sind der oder die Detektoren der Schutzschaltung in einer Schaltungsebene unterhalb der obersten Schaltungsebene mit Leitbahnen der Schutzschaltung angeordnet und durch diese Leiterbahnen vor einem ungewollten Zugriff geschützt. Durch diesen systematischen Aufbau ist ein kaskadierender Schutz durch die Leiterbahnen der Schutzschaltungen für die Detektoren der Schutzschaltung und durch die Leiterbahn mit Detektoren für die integrierte Schaltung gegeben.

Durch diese Anordnung ist ein Beobachten oder Manipulieren des oder der Detektoren aufgrund des Schutzes durch die darüberliegenden Leitungen verhindert, was eine weitere Angriffsmöglichkeit ausschließt, in der direkt ohne über die Leiterbahnen zu gehen in die Detektoren Signale eingespeist werden könnten.

Auf entsprechende Weise erweist es sich als vorteilhaft, den oder die Generatoren in einer Schaltungsebene anzuordnen, die durch darüberliegende Leiterbahnen der Schutzschaltung geschützt sind. Mithin erweist sich eine derartige Anordnung der Detektoren bzw. der Generatoren der Schutzschaltung als wesentliches Mittel, die Schutzwirkung der Schutzschaltung vor unberechtigtem Zugriff zu erhöhen.

Werden die unterschiedlichen Signale völlig unabhängig voneinander beispielsweise von unabhängigen Generatoren erzeugt, so ist sichergestellt, dass sich diese Signale in ihrem Signalverlauf wesentlich unterscheiden, da sie systematisch nicht voneinander abhängen, und dadurch gesamt nur mit extremem Aufwand und unter extremen Schwierigkeiten simuliert werden können. Dies um so mehr, da die Vielzahl von unterschiedlichen Signalen zielgerichtet in die richtigen Leiterbahnen respektive die richtigen Detektoren eingeführt werden müssen, was bei den äußerst begrenzten räumlichen Abmessungen des integrierten Schaltkreises mit der Schutzschaltung nahezu unmöglich ist. Mithin erweist sich eine derartige Schutzschaltung als besonders erfolgreich im Schutz eines integrierten Schaltkreises.

Es können einer Leiterbahn mehrere Detektoren zugeordnet werden, die das Signal auf der einen Leiterbahn an einer für den jeweiligen Detektor spezifischen Position abgreifen und es überwachen. Bei dieser Art der Ausbildung wird somit die Leiterbahn in mehrere Leiterbahnstücke aufgeteilt, die jeweils durch ihnen zugeordnete Detektoren überwacht werden. Damit nehmen diese Leiterbahnstücke die Funktion einer überwachten Leiterbahn ein. Darüber hinaus ist aber durch die mehrfache Überwachung der gesamten Leiterbahn mit den verschiedenen Leiterbahnstücken sichergestellt, dass wenn ein Eingriff in diese Leiterbahn durch geeignete Eingriffsvorkehrungen durch eine einen Detektor nicht wahrgenommen sein könnte, so doch die anderen oder ein Teil der anderen Detektoren an der gesamten Leiterbahn eine Veränderung des überwachten Signals feststellen werden und einen Alarm auslösen werden. Damit ist durch die redundante Anordnung der Detektoren an einer Leiterbahn eine gesteigerte Schutzwirkung der Schutzschaltung gegeben.

Im allgemeinen wird man bestrebt sein, möglichst viele Signalleitungen und möglichst viele Signal-Generatoren bzw. - Detektoren vorzusehen, die einen Angriff in Form von Rekonfiguration allein durch Ihre Anzahl erschweren. Abhängig von der Größe des integrierten Schaltkreises sind dem jedoch Grenzen gesetzt, da viele Einzelsignale einen hohen Hardwareaufwand bedeuten, was zu einer signifikanten Verteurung der Schaltung durch die Sicherheitsmaßnahme führt.

Bei der Erfindung ist die oben beschriebene Methode der Schutzsignalerzeugung deshalb mit einem Multiplexer und einem Demultiplexer kombiniert. Hierdurch werden durch ein zeitliches Multiplexverfahren verschiedene Leiterbahnen des Schutzschildes zu verschiedenen Zeiten mit den gleichen Generatorausgängen und Detektoreingägen verbunden. Auf diese Weise ist die Anzahl der Generatoren und Detektoren kleiner als die Anzahl der Schildsegmente.

Ein weiterer Vorteil dieser Anordnung ist darin zu sehen, daß die Zahl der Referenzleitungen, die die Detektoren mit einem Referenzsignal vom zugehörigen Generator versorgen, ebenfalls reduziert ist, was zu einer erheblichen Einsparung an Chipfläche führt.

Die Multiplexer und Demultiplexer können entweder zentral synchron gesteuert werden, oder ihr Zustand hängt nur von der Anzahl der vergangenen Taktzyklen des gemeinsamen Taktsystems ab. Besonders vorteilhaft ist eine zufällige oder pseudozufällige Ansteuerung der Multiplexer-Kanäle. Eine echt zufällige Ansteuerung erfordert eine laufende Synchronisation von Multiplexer und Demultiplexer durch spezielle Steuersignale. Eine pseudozufällige Ansteuerung erlaubt eine lokale Erzeugung identischer Steuersignale jeweils in räumlicher Nähe von Multiplexer und Demultiplexer.

Nach einer besonders bevorzugten Ausführungsform der Schutzschaltung sind bei mehreren Detektoren diese miteinander vernetzt ausgebildet. Dadurch wird erreicht, dass, sobald ein Detektor ein Fehlverhalten und damit einen unerlaubten Angriff auf den integrierten Schaltkreis feststellt, der integrierte Schaltkreis so angesteuert wird, dass er in einen umfassenden Sicherheitsmodus überführt wird. Über die Vernetzung ist es auch möglich, dass die einzelnen Detektoren die Funktionsfähigkeit der anderen Detektoren oder auch nur das Vorhandensein der anderen Detektoren im Rahmen einer Acknowledgement-Funktion oder im Rahmen einen Watchdog-Funktion überprüfen und dadurch einen unerlaubten Eingriff in die Schutzschaltung bzw. den integrierten Chip erkennen und den entsprechenden Sicherheitsmodus des integrierten Schaltkreises auslösen.

Es hat sich als vorteilhaft erwiesen, neben den Detektoren auch die Generatoren zu vernetzen, wodurch ein Ausfall oder ein Eingreifen in einen Generator erkannt werden kann. Darüber hinaus ist es nun durch die Vernetzung der Generatoren mit den Detektoren möglich, dass die Generatoren den ihnen zugeordneten Detektoren Information über die von ihnen abgegebenen Signale beispielsweise über den zeitlichen Verlauf, über ihre Pegel, über ihre Form oder ähnliches vermitteln. Dadurch lässt sich die Variabilität der unterschiedlichen Signale und damit die Freiheitsgrade der Schutzschaltung wesentlich erhöhen, was den Eingriff erschwert und dadurch die Schutzwirkung der Schutzschaltung vor einem unbemerkten Angriff auf den integrierten Schaltkreis wesentlich erhöht.

Die erfindungsgemäße Schutzschaltung zeigt somit den grundlegenden Gedanken, die Komponenten der Schutzschaltung nicht mehr lokal konzentriert anzuordnen, sondern diese zu dezentralisieren, über einen größeren räumlichen Bereich zu verteilen, sie zu vervielfältigen und sie differenziert auszubilden. Dies führt dazu, dass die Erzeugung und der Transport über die Leiterbahnen und die Überwachung der Signale auf mehrere, redundante Einheiten verteilt wird, was zu einer größeren Sicherheit gegen ein unbemerktes Beobachten oder Manipulieren der Schutzschaltung bzw. des zu schützenden integrierten Schaltkreises führt.

Erfindungsgemäße Schutzschaltungen für integrierte Schaltkreise und deren Vorteile werden im folgenden anhand von Ausführungsbeispielen mit Hilfe von Zeichnungen näher erläutert. Es zeigen:
- Fig. 1: einen Schaltungsaufbau einer Schutzschaltung mit einem Signalgenerator und einem Signaldetektor pro Leiterbahn,
- Fig. 2: einen Schaltungsaufbau einer weiteren beispielhaften Schutzschaltung,
- Fig. 3: eine Schnittdarstellung durch eine integrierte Schaltung mit Schutzschaltung und
- Fig. 4: einen Schaltungsaufbau einer erfindungsgemäßen Schutzschaltung mit Demultiplexer/Multiplexer-Anordnungen.

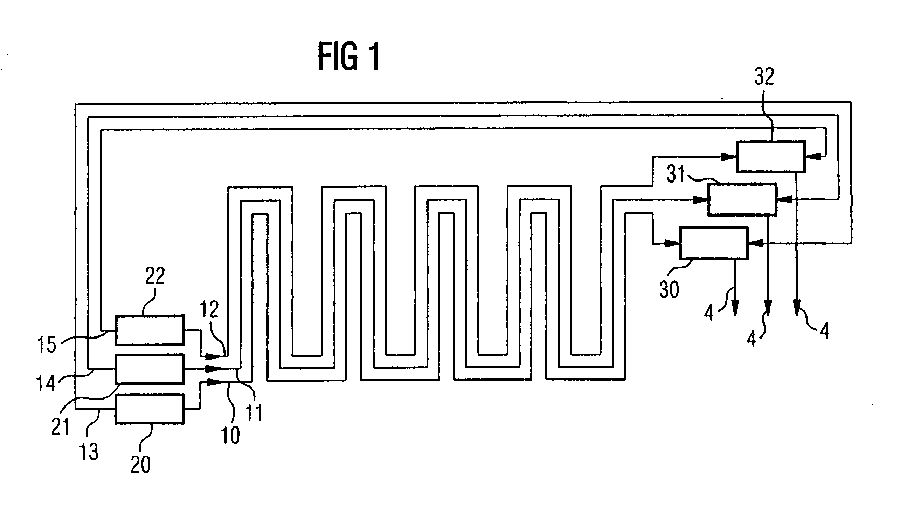

In Fig. 1 ist schematisch der Aufbau einer Schutzschaltung für eine integrierte Schaltung dargestellt. Sie zeigt drei voneinander getrennte, parallel verlaufende Leiterbahnen 10, 11, 12. Diese Leiterbahnen 10, 11, 12 verlaufen mäanderförmig und decken einen bestimmten Bereich in einer Schaltungsebene der integrierten Schaltung ab.

Die Leiterbahnen 10, 11, 12 sind mit jeweils einem eigenen Signalgenerator 20, 21, 22 verbunden. Über die Signalgeneratoren 20, 21, 22 werden voneinander unabhängige und damit prinzipiell auch unterschiedliche Signale in die Leiterbahnen 10, 11, 12 eingespeist. Die eingespeisten Signale durchlaufen die Leiterbahnen 10, 11, 12 und werden am Ende der Leiterbahnen 10, 11, 12 mittels einem jeder Leiterbahn zugeordneten Detektor 30, 31, 32 analysiert.

Im Rahmen dieser Analyse werden die über die Leiterbahnen 10, 11, 12 empfangenen unterschiedlichen Signale mit den über Verbindungsleitungen 13, 14, 15 zwischen den Generatoren 20, 21, 22 und den diesen zugeordneten Detektoren 30, 31, 32 zugespielten Referenzsignale verglichen. Die Referenzsignale stellen entweder unmittelbar die Signale, wie sie nach dem Durchlaufen der Leiterbahnen 10, 11, 12 aussehen dar oder sie geben die notwendigen Informationen, um aus ihnen die erforderlichen Informationen für die Referenzsignale zu ermitteln.

Die Auswertung in den Detektoren 30, 31, 32 erfolgt, indem die Referenzsignale mit den eingehenden, über die Leiterbahnen 10, 11, 12 erhaltenen Signale verglichen werden. Beim Feststellen eines Unterschiedes wird ein Alarmsignal als Steuersignal für die integrierte Schaltung generiert und über die jedem Detektor 30, 31, 32 zugeordnete Alarmleitung 4 an die integrierte Schaltung geleitet.

Anhand dieses Alarmsignals wird dann die integrierte Schaltung in einen Zustand überführt, der als Sicherheitsmodus bezeichnet wird. In diesem Sicherheitsmodus lassen sich beispielsweise die Inhalte der Speicherzellen nicht mehr auslesen, da sie beispielsweise unmittelbar nach dem Übergang in den Sicherheitsmodus vollständig gelöscht und somit die darin enthaltenen Informationen unwiederbringlich verloren gegangen sind. Damit ist es nicht mehr möglich, die in Programm- und Datenspeichern enthaltenen wichtigen Informationen der integrierten Schaltung, beispielsweise Codeschlüssel oder Pin-Nummern oder persönliche Daten des Benutzers auszulesen oder zu manipulieren.

Durch die mehrfache, dezentralisierte Ausbildung der Leiterbahnen 10, 11, 12, der Signalgeneratoren 20, 21, 22 und der Detektoren 30, 31, 32 lässt sich diese Schutzschaltung nur noch sehr schwierig durch Zuführung von äußeren Signalen täuschen, um nähere Informationen über die zu schützende integrierte Schaltung beispielsweise auf der Basis eines Abhobelprözesses oder Bohrprozesses oder ähnliches zu gewinnen.

Durch die Notwendigkeit, nicht nur ein Signal zu simulieren, sondern gleichzeitig eine Vielzahl von unterschiedlichen Signalen an verschiedenen Orten für verschiedene Detektoren zu simulieren, welche auf einem räumlich sehr begrenzten Bereich angeordnet sind, ist es nahezu unmöglich, einen Angriff auf die integrierte Schaltung ohne Feststellung einer Signalveränderung und damit eines Fehlverhaltens und damit eines Angriffs auf die Schutzschaltung mit der zu schützenden integrierten Schaltung zu führen. Sollte ein Detektor 30 ein Fehlverhalten des ihm zugeführten Signals der Leiterbahn 10 feststellen, so wird er unabhängig von den anderen Detektoren 31, 32 ein Alarmsignal über die Alarmleitung 4 an die integrierte Schaltung absetzen und dadurch den Sicherheitsmodus auslösen.

Durch die mäanderförmige parallele Ausbildung der Leiterbahnen 10, 11, 12 ist eine weitgehend geschlossene, flächendekkende Leiterbahnenstruktur gegeben, die die darunterliegende integrierte Schaltung oder zumindest einen Bereich davon vor einem Zugriff durch diese Leiterbahnen 10, 11, 12 hindurch schützt. Sollte jemand versuchen mit mechanischen Mitteln an die unter den Leiterbahnen 10, 11, 12 liegende integrierte Schaltung zu gelangen, so wird er weitgehend gezwungen sein, eine der Leiterbahnen 10, 11, 12 zu verletzen bzw. sogar ganz zu unterbrechen, was zu einer signifikanten Änderung des über diese Leiterbahn übertragenen Signals führt. Diese signifikante Änderung wird als Fehlverhalten durch den dieser Leiterbahn zugeordneten Detektor 30, 31, 32 indentifiziert und ein dementsprechendes Alarmsignal abgegeben.

Die Leiterbahnen 10, 11, 12 sind mit einer so schmalen Leiterbahnbreite ausgebildet, dass jegliche Bohrung zur Überwindung der Schaltungsebenen 2, 3 der Schutzschaltung zu einer Unterbrechung einer Leiterbahn führt. Dazu ist es notwendig, den Abstand der einzelnen Leiterbahnen 10, 11, 12 sehr gering zu wählen und die Leiterbahn eng mäandriert in der oder den Schaltungsebenen anzuordnen. Mithin ist eine absolut sichere Unterbrechung durch eine zu verhindernde Beobachtung oder Manipulation gegeben, indem das Signal auf dieser unterbrochenen Leiterbahn 10, 11, 12 völlig unterbrochen wird und als Angriff interpretiert wird.

Die durch die Generatoren 20, 21, 22 generierten Signale sind spezielle, meist digitale, aber auch analoge Signale, die eine Veränderung auf dem Übertragungsweg über die Leiterbahn 10, 11, 12 deutlich in einer Signalveränderung hervortreten lassen.

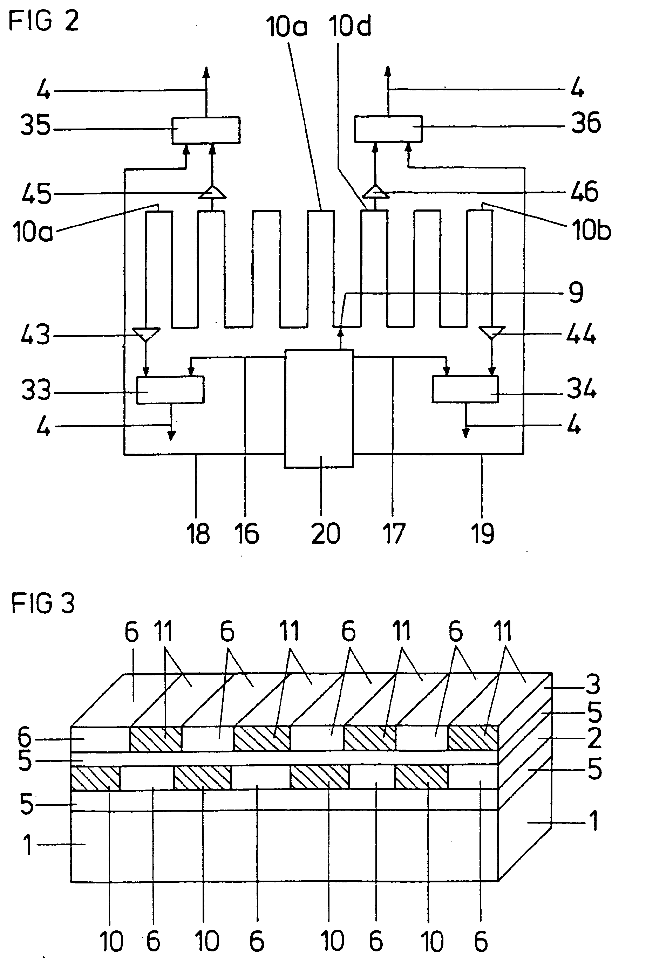

In Fig. 2 ist eine Ausbildung einer weiteren Schutzschaltung schematisch dargestellt. Hier ist eine einzige zusammenhängende Leiterbahnenstruktur gegeben, die einen Einspeisungspunkt 9 für ein durch den einen Signalgenerator 20 gebildetes Signal in die Leiterbahnenstruktur zeigt.

An der Leiterbahnenstruktur sind vier Positionen zur Auskopplung eines über die Leiterbahnenstruktur übertragenen Signals vorgesehen. Jede dieser Auskopplungspositionen ist mit einem Verstärker 43, 44, 45, 46 zur Verstärkung des ausgekoppelten Signals versehen. Diese verstärkten Signale werden anschließend den Detektoren 33, 34, 35, 36 zugeführt. Die Leiterbahnenstruktur bildet abhängig vom jeweiligen Abgriffspunkt die Leiterbahn 10a, das ist die Leiterbahnstruktur zwischen dem Einspeisungspunkt 9 und dem Abgriffspunkt des Verstärkers 43 für den Detektor 33, die Leiterbahn 10b zwischen dem Einspeisepunkt 9 und dem Abgriffspunkt defininiert durch den Verstärker 44 für den Detektor 34, die Leiterbahn 10c zwischen dem Einspeisepunkt 9 und dem Abgriffspunkt für den Verstärker 45 für den Detektor 35 und die Leiterbahn 10d zwischen dem Einspeisepunkt 9 und dem Abgriffspunkt für den Verstärker 46 zu dem Detektor 36.

Jeder der Detektoren arbeitet unabhängig von den anderen Detektoren und kann über seine Alarmleitung 4 die integrierte Schaltung so ansteuern, dass diese in den Sicherheitsmodus überführt wird.

Der Generator 20 ist über die Verbindungsleitungen 16, 17, 18, 19 mit den Detektoren 33, 34, 35, 36 verbunden und übermittelt diesen Detektoren die spezifischen Informationen für die Referenzsignale zur Überwachung der Leiterbahn 10a, 10b, 10c, 10d. Der Generator 20 wählt softwaregesteuert zufällig die Art des eingespeisten Signals aus und signalisiert über die entsprechenden Verbindungsleitungen 16, 17, 18, 19 den Detektoren die Form des eingespeisten Signals. Die Detektoren 33, 34, 35 werten das ihnen vom Generator 20 über die Verbindungsleitung 16, 17, 18, 19 zugeführte Signal aus, indem sie es mit dem von den Abgriffspunkten zugeführten Signal der Leiterbahn 10a, 10b, 10c, 10d vergleichen. Ist ein signifikanter Unterschied, also ein Fehlverhalten festzustellen, so wird jeder Detektor 33, 34, 35, 36 unabhängig von den anderen über seine Alarmleitung 4 Alarm geben und dadurch die integrierte Schaltung in den Sicherheitsmodus überführen.

Durch die überlappende zusammenhängende Ausbildung der Leiterbahn 10a, 10b, 10c, 10d ist erreicht, dass ein Eingriff in die Leiterbahn des Leiterbahnensystems zu einer Veränderung nicht nur einer Leiterbahn 10a, 10b, 10c, 10d führt, sondern zu einer Veränderung des Signals auf mehreren Leiterbahnen 10a, 10b, 10c, 10d zugleich. Damit muss im Falle eines ungewollten Beobachtens oder Manipulierens nicht nur das Signal eines Detektors, sondern mehrere insbesondere aller Detektoren 33, 34, 35, 36 dieses Leiterbahnensystems mit einem simulierten und korrekten Signal beaufschlagt werden. Dieses Signal muss in seiner Form und seiner Art und seinem zeitlichen Verlauf dem Referenzsignal entsprechen, das über die Verbindungsleitung 16, 17, 18, 19 vom Generator 20 den Detektoren 33, 34, 35, 36 unmittelbar oder mittelbar zugeführt wird. Dabei wird deutlich, dass der dargestellte Generator 20 in der Lage ist, softwaregesteuert sein am Einspeisepunkt 9 eingespeistes Signal dynamisch zu verändern und dadurch die Beobachtung oder Manipulation der Schutzschaltung und damit des durch die Schutzschaltung geschützten integrierten Schaltkreises 1 weitgehend auszuschließen.

In Fig. 3 ist der schichtweise Aufbau des integrierten Schaltkreises 1 mit der darüber angeordneten Schutzschaltung dargestellt. In der Fig. 3 ist auf die Darstellung einer entsprechenden Schutzschaltung auf der unteren Seite der integrierten Schaltung verzichtet worden. Eine solche zweite Schutzschaltung auf der anderen Seite der integrierten Schaltung 1 zeigt einen entsprechenden Aufbau wie die hier dargestellte Schutzschaltung.

Die Schutzschaltung ist oberhalb der integrierten Schaltung 1 angeordnet. Sie zeigt zwei übereinanderliegende Schaltungsebenen 2, 3, welche mittels einer Isolationsschicht 5 voneinander und von der zu schützenden integrierten Schaltung 1 getrennt sind. Durch diese Isolationsschicht ist ein elektrischer Kurzschluss zwischen den Leiterbahnen 10, 11 und der integrierten Schaltung 1 ausgeschlossen.

In der ersten Schaltungsebene 2 sind die Leiterbahnen 10 streifenförmig ausgebildet und durch streifenförmige Isolationsbereiche 6 voneinander getrennt. Die Leiterbahnen 10 sind parallel zueinander in der ersten Schaltungsebene 2 angeordnet. Oberhalb der Schaltungsebene 2 ist eine zweite Schaltungsebene 3 angeordnet, die entsprechende streifenförmige, parallel zueinander angeordnete Leiterbahnen 11 zeigt. Auch diese Leiterbahnen 11 sind durch Isolationsbereiche 6 voneinander getrennt und damit gegeneinander isoliert. Die Leiterbahnen 10 sind so angeordnet, dass sie in Zusammenwirkung mit den Leiterbahnen 11 die zu schützende integrierte Schaltung vollständig bedecken. Diese vollständige Bedeckung ist dann erreicht, wenn in Durchsicht durch die erste und zweite Schaltungsebene 2 jeder Punkt der zu schützenden integrierenden Schaltung bzw. jeder zu schützende Punkt der integrierten Schaltung 1 entweder von den Leiterbahnen 10 oder von den Leiterbahnen 11 oder sowohl von Leiterbahnen 10 wie auch von Leiterbahnen 11 überdeckt sind.

Will jemand Zugriff auf die zu schützende integrierte Schaltung 1 nehmen, so muss er zunächst die Schutzschaltung durchdringen und dabei die Schaltungsebenen 2, 3 durchbrechen und hier aufgrund der vollständigen Bedeckung zumindest eine der Leiterbahnen 10, 11 verletzen. Eine derartige Verletzung, die beispielsweise eine völlige Unterbrechung der Leiterbahnen darstellen kann oder ein Kurzschluss zwischen den Leiterbahnen in einer Schaltungsebene 2, 3 oder zwischen den Schaltungsebenen 2, 3 oder auch nur in einer teilweisen Zerstörung der Leiterbahn 10, 11 bestehen kann, führt zu einer deutlichen Veränderung des übertragenen Signals, welches im Vergleich mit dem erwarteten Referenzsignal durch den zugeordneten Detektor als Fehlsignal und damit als Angriff auf die Schutzschaltung bzw. den zu schützenden integrierten Schaltkreis 1 interpretiert wird, was zur Absetzung eines Alarmsignals an die integrierte Schaltung 1 führt. Durch dieses Alarmsignal wird dann die integrierte Schaltung 1 in den Sicherheitsmodus überführt.

In der ersten Schaltungsebene 2 werden geschützt durch die darüberliegende Schaltungsebene 3 mit den entsprechend angeordneten Leiterbahnen 11 die hier nicht dargestellten Generatoren 20, 21, 22 bzw. die entsprechenden hier nicht dargestellten Detektoren 30 bis 36 angeordnet. Insbesondere erfolgt diese Anordnung verteilt über die ganze erste Schaltungsebene 2, was die Möglichkeiten einer Überwindung der Schutzschaltung deutlich einschränkt.

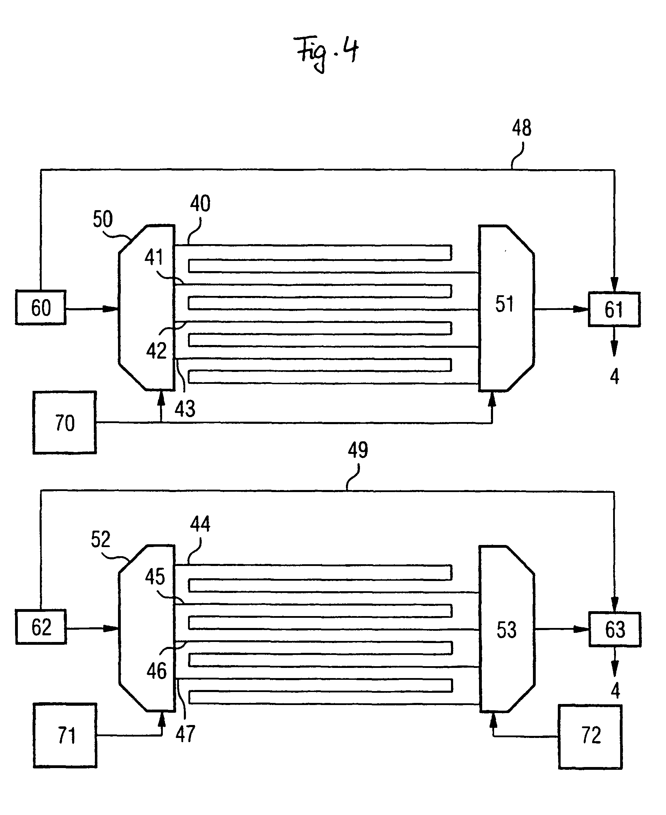

In Fig 4 ist ein Ausführungsbeispiel der Erfindung gezeigt mit acht Leiterbahnen 40 ... 47. Diese acht Leiterbahnen 40 ... 47 sind in zwei Gruppen zu je vier Leiterbahnen 40 ... 43 bzw. 44 ... 47 unterteilt. Jeder der beiden Gruppen ist nur ein Signalgenerator 60 bzw. 62 und ein Signaldetektor 61 bzw. 63 zugeordnet. Die Signale der Signalgeneratoren 60, 62 werden den Leiterbahngruppen 40 ... 43 bzw. 44 ... 47 über Demultiplexer 50 bzw. 52 und die über die Leiterbahnen übertragenen Signale über Multiplexer 51 bzw. 53 den Signaldetektoren 61 bzw. 63 zugeführt.

Um den Signaldetektoren 61, 63 die erforderlichen Referenzsignale zuführen zu können ist bei dieser Ausgestaltung der Erfindung pro Leiterbahngruppe nur eine Verbindungsleitung 48 bzw. 49 nötig. Die Signaldetektoren 61, 63 zeigen auch hier über Alarmleitungen 4 an, wenn das über die Multiplexer 51, 53 empfangene Signal nicht mit dem erwarteten übereinstimmt.

Bei dem dargestellten Ausführungsbeispiel mit zwei Leiterbahngruppen 40 ... 43 bzw. 44 ... 47 sind zwei verschiedene Möglichkeiten der Ansteuerung der Demultiplexer 50, 52 und Multiplexer 51, 53 gezeigt. Bei der im oberen Teil der Fig 4 dargestellten Leiterbahngruppe 40 ... 43 werden der Demultiplexer 50 und der Multiplexer gemeinsam von einem echten Zufallszahlengenerator 70 zur Auswahl einer der Leiterbahnen 40 ... 43 angesteuert. Bei der darunter dargestellten Leiterbahngruppe 44 ... 47 werden den zugehörige Demultiplexer 52 und der zugehörige Multiplexer 53 von zwei verschiedenen jedoch gleichartig ausgebildeten Pseudo-Zufallzahlen-Generatoren 71, 72 angesteuert, die aufgrund ihres gleichartigen Aufbaus bei gemeinsamer Taktung zu gleichen Zeitpunkten die gleichen Zufallszahlen liefern. Prinzipiell ist es jedoch auch möglich, die Demultiplexer 50, 52 und Multiplexer 51, 53 durch ein Taktsignal selbst anzusteuern, was zwar schaltungstechnisch einfacher jedoch sicherheitskritischer ist.

Bei gegebener Chipfläche kann aufgrund dieser erfindungsgemäßen Weiterbildung einer Schutzschaltung ein guter Kompromiss zwischen möglichst vollständiger Abdeckung der Chipoberfläche mit möglichst schmalen und nah beieinanderliegenden Leiterbahnen und dem Wunsch nach möglichst geringem schaltungstechnischem Aufwand gefunden werden.

## Patentansprüche

1. Schutzschaltung für eine integrierte Schaltung (1), wobei die Schutzschaltung in mindestens einer Schaltungsebene (2, 3) unterhalb und/oder oberhalb der integrierten Schaltung (1) angeordnet ist, mit mehreren Leiterbahnen (40 - 47), die mit mindestens einem Signal aus mindestens einem Signalgenerator (60, 62) beaufschlagt werden, mit mindestens einem Detektor (61, 63), der die unterschiedlichen über die einzelnen Leiterbahnen (40 - 47) übertragenen Signale auf ein Fehlverhalten auswertet und im Falle eines Feststellen eines solchen Fehlverhaltens ein Steuersignal zur Überführung der integrierten Schaltung (1) in einen Sicherheitsmodus abgeben kann, mit einem Demultiplexer (50, 52), an den ein Ende der Leiterbahnen (40 - 47) angeschlossen ist, mit einem Multiplexer (51, 53), an den ein anderes Ende der Leiterbahnen (40 - 47) angeschlossen ist, und einerseits mit einem zufallsgesteuerten Auswahlsignal-Generator (70) zur Ansteuerung des Demultiplexers (50) und des Multiplexers (51) zur Auswahl einer der mehreren Leiterbahnen oder andererseits mit sowohl einem zufallsgesteuerten Auswahlsignal-Generator (71) zur Ansteuerung des Demultiplexers (52) als auch mit einem gleichartig ausgebildeten zufallsgesteuerten Auswahlsignal-Generator (72) zur Ansteuerung des Multiplexers (53) jeweils zur Auswahl einer der mehreren Leiterbahnen, wobei der mindestens eine Signalgenerator (60, 62) mit dem Demultiplexer (50, 52) gekoppelt ist und der mindestens eine Detektor (61, 63) mit dem Multiplexer (51, 53) gekoppelt ist.

2. Schutzschaltung nach Anspruch 1,
**dadurch gekennzeichnet, daß**
der Auswahlsignal-Generator (70) ein Zufallszahlen-Generator (70) ist.

3. Schutzschaltung nach Anspruch 1,
**dadurch gekennzeichnet, daß**
der Auswahlsignal-Generator ein Pseudo-Zufallszahlen-Generator (71, 72) ist.

4. Schutzschaltung nach einem der Ansprüche 1 bis 3,
**dadurch gekennzeichnet, daß**
mehrere Detektoren (30, ..., 36) vorgesehen sind, die miteinander vernetzt sind.

5. Schutzschaltung nach einem der Ansprüche 1 bis 4,
**dadurch gekennzeichnet, daß**
mehrere Signalgeneratoren (20, 21, 22) vorgesehen sind, die miteinander vernetzt sind.

6. Schutzschaltung nach einem der Ansprüche 1 bis 5,
**dadurch gekennzeichnet, daß**
die Leiterbahnen über mehrere Schaltungsebenen (2, 3) der Schutzschaltung erstreckt sind.

7. Schutzschaltung nach einem der Ansprüche 1 bis 6,
**dadurch gekennzeichnet, daß**
die Leiterbahnen so ausgebildet sind, daß die zu schützende integrierte Schaltung (1) weitgehend oder vollständig bedeckt ist.

8. Schutzschaltung nach einem der Ansprüche 1 bis 7,
**dadurch gekennzeichnet, daß**
die Leiterbahnen mit schmaler Breite ausgebildet sind.

9. Schutzschaltung nach einem der Ansprüche 1 bis 8,
**dadurch gekennzeichnet, daß**
die Detektoren in einer Schaltungsebene (2) unterhalb der Schaltungsebene (3) mit den Leiterbahnen (11) und durch diese Leiterbahnen (11) vor Zugriff geschützt angeordnet sind.

10. Schutzschaltung nach einem der Ansprüche 1 bis 9.
**dadurch gekennzeichnet, daß**
der Auswahlsignal-Generator (70, 71) in einer Schaltungsebene (2) unterhalb der Schaltungsebene (3) mit den Leiterbahnen (11) und durch diese Leiterbahnen (11) vor Zugriff geschützt angeordnet sind.

11. Schutzschaltung nach einem der Ansprüche 1 bis 10,
**dadurch gekennzeichnet, daß**
die unterschiedlichen Signale unabhängig voneinander generiert sind.

12. Schutzschaltung nach einem der Ansprüche 1 bis 11,
**dadurch gekennzeichnet, daß**
der Auswahlsignal-Generator (70, 71) für unterschiedliche Signale so ausgebildet ist, daß sich die Signale im zeitlichen Verlauf dynamisch ändern.

13. Schutzschaltung nach einem der Ansprüche 1 bis 12,
**dadurch gekennzeichnet, daß**
die integrierte Schaltung (1) sandwichartig durch mehrere Schaltungsebenen (2, 3) der Schutzschaltung umschlossen ist.

14. Schutzschaltung nach einem der Ansprüche 1 bis 13,
**dadurch gekennzeichnet, daß**
eine Einheit zur Bestimmung des Integritätswertes eines dem Detektor zugeführten Signals vorgesehen ist und dieser Integritätswert zur Feststellung eines Fehlverhaltens ausgewertet wird.

## Claims

1. Protective circuit for an integrated circuit (1), the protective circuit being arranged in at least one circuit plane (2, 3) below and/or above the integrated circuit (1), having a plurality of interconnects (40-47) to which are applied at least one signal from at least one signal generator (60, 62), having at least one detector (61, 63), which evaluates the various signals transmitted via the individual interconnects (40-47) with regard to an incorrect behaviour and, in the case of the ascertaining such an incorrect behaviour, can output a control signal for transferring the integrated circuit (1) into a security mode, having a demultiplexer (50, 52), to which one end of the interconnects (40-47) is connected, having a multiplexer (51, 53), to which another end of the interconnects (40-47) is connected, and on the one hand having a randomly controlled selection signal generator (70) for driving the demultiplexer (50) and the multiplexer (51) for selection of one of the plurality of interconnects or on the other hand having both a randomly controlled selection signal generator (71) for driving the demultiplexer (52) and having an identically designed randomly controlled selection signal generator (72) for driving the multiplexer (53) in each case for selection of one of the plurality of interconnects, the at least one signal generator (60, 62) being coupled to the demultiplexer (50, 52) and the at least one detector (61, 63) being coupled to the multiplexer (51, 53).

2. Protective circuit according to Claim 1,
**characterized in that**
the selection signal generator (70) is a random number generator (70).

3. Protective circuit according to Claim 1,
**characterized in that**
the selection signal generator is a pseudo-random number general (71, 72).

4. Protective circuit according to one of Claims 1 to 3,
**characterized in that**
a plurality of detections (30, ..., 36) are provided, which are interlinked with one another.

5. Protective circuit according to one of Claims 1 to 4,
**characterized in that**
a plurality of signal generators (20, 21, 22) are provided, which are interlinked with one another.

6. Protective circuit according to one of Claims 1 to 5,
**characterized in that**
the interconnects are extended over a plurality of circuit planes (2, 3) of the protective circuit.

7. Protective circuit according to one of Claims 1 to 6,
**characterized in that**
the interconnects are formed in such a way that the integrated circuit (1) to be protected is largely or completely covered.

8. Protective circuit according to one of Claims 1 to 7,
**characterized in that**
the interconnects are formed with a narrow width.

9. Protective circuit according to one of Claims 1 to 8,
**characterized in that**
the detectors are arranged in a circuit plane (2) below the circuit plane (3) with the interconnects (11) and in a manner protected against access by means of the said interconnects (11).

10. Protective circuit according to one of Claims 1 to 9,
**characterized in that**
the selection signal generator (70, 71) is arranged in a circuit plane (2) below the circuit plane (3) with the interconnects (11) and in a manner protected against access by means of the said interconnects (11).

11. Protective circuit according to one of Claims 1 to 10,
**characterized in that**
the various signals are generated independently of one another.

12. Protective circuit according to one of Claims 1 to 11,
**characterized in that**
the selection signal generator (70, 71) is designed for various signals in such a way that the signals change dynamically in the temporal profile.

13. Protective circuit according to one of Claims 1 to 12,
**characterized in that**
the integrated circuit (1) is enclosed in a sandwich-like manner by a plurality of circuit planes (2, 3) of the protective circuit.

14. Protective circuit according to one of Claims 1 to 13,
**characterized in that**
a unit for determining the integrity value of a signal fed to the detector is provided and the said integrity value is evaluated in order to ascertain an incorrect behaviour.

## Revendications

1. Circuit de protection d'un circuit (1) intégré dans lequel le circuit de protection est disposé dans au moins un plan (2, 3) de circuit en dessous et/ou au-dessus du circuit (1) intégré, comprenant plusieurs pistes (40 à 47) conductrices qui reçoivent au moins un signal provenant d'au moins un générateur (60, 62) de signal, comprenant au moins un détecteur (61, 63) qui exploite le comportement faussé des différents signaux transmis par les diverses pistes (40 à 47) conductrices et qui, s'il est constaté un comportement faussé de ce genre, peut émettre un signal de commande pour mettre le circuit (1) intégré dans un mode de sécurité, comprenant un démultiplexeur (50, 52) auquel est relié une extrémité des pistes (40 à 47) conductrices, comprenant un multiplexeur (51, 53) auquel est reliée une autre extrémité des pistes (40 à 47) conductrices et comprenant d'une part un générateur (70) de signal de sélection commandé de manière aléatoire et destiné à commander le démultiplexeur (50) et le multiplexeur (51) pour sélectionner l'une parmi les plusieurs pistes conductrices ou d'autre part comprenant tant un générateur (71) d'un signal de sélection commandé de façon aléatoire destiné à commander le démultiplexeur (52) qu'également un générateur (72) de signal de sélection commandé de façon aléatoire et de constitution de même type destiné à commander le multiplexeur (53), respectivement, pour sélectionner l'une parmi les plusieurs pistes conductrices, le au moins un générateur (60, 62) de signal étant couplé au démultiplexeur (50, 52) et le au moins un détecteur (61, 63) au multiplexeur (51, 53).

2. Circuit de protection suivant la revendication 1, **caractérisé en ce que** le générateur (70) de signal de sélection est un générateur (70) de nombres aléatoires.

3. Circuit de protection suivant la revendication 1, **caractérisé en ce que** le générateur de signal de sélection est un générateur (71, 72) de nombres pseudo-aléatoires.

4. Circuit de protection suivant l'une des revendications 1 à 3, **caractérisé en ce qu'**il est prévu plusieurs détecteurs (30... 36) qui sont mis en réseau entre eux.

5. Circuit de protection suivant l'une des revendications 1 à 4, **caractérisé en ce qu'**il est prévu plusieurs générateurs (20, 21, 22) de signal qui sont mis en réseau entre eux.

6. Circuit de protection suivant l'une des revendications 1 à 5, **caractérisé en ce que** les pistes conductrices s'étendent sur plusieurs plans (2, 3) de circuit du circuit de protection.

7. Circuit de protection suivant l'une des revendications 1 à 6, **caractérisé en ce que** les pistes conductrices sont constituées de façon à ce que le circuit (1) intégré à protéger soit recouvert entièrement ou dans une grande mesure.

8. Circuit de protection suivant l'une des revendications 1 à 7, **caractérisé en ce que** les pistes conductrices ont une largeur étroite.

9. Circuit de protection suivant l'une des revendications 1 à 8, **caractérisé en ce que** les détecteurs sont disposés dans un plan (2) du circuit en dessous du plan (3) du circuit ayant les pistes (11) conductrices et sont protégés vis-à-vis d'un accès par ces pistes (11) conductrices.

10. Circuit de protection suivant l'une des revendications 1 à 9, **caractérisé en ce** les générateurs (70, 71) de signal de sélection sont disposés dans un plan (2) du circuit en dessous du plan (3) du circuit ayant les pistes (11) conductrices et sont protégés vis-à-vis d'un accès par ces pistes (11) conductrices.

11. Circuit de protection suivant l'une des revendications 1 à 10, **caractérisé en ce que** les signaux différents sont engendrés indépendamment les uns des autres.

12. Circuit de protection suivant l'une des revendications 1 à 11, **caractérisé en ce que** le générateur (70, 71) de signal de sélection est constitué pour des signaux différents de façon à ce que les signaux varient dynamiquement au cours du temps.

13. Circuit de protection suivant l'une des revendications 1 à 12, **caractérisé en ce que** le circuit (1) intégré est pris en sandwich par plusieurs plans (2, 3) de circuit du circuit de protection.

14. Circuit de protection suivant l'une des revendications 1 à 13, **caractérisé en ce qu'**il est prévu une unité de détermination de la valeur d'intégrité d'un signal envoyé au détecteur et cette valeur d'intégrité est exploitée pour constater un comportement faussé.
